(19)

Europäisches
Patentamt
European
Patent Office
Office européen
des brevets

(11)     EP 2 819 290 B1

(12)          **EUROPEAN PATENT SPECIFICATION**

(45) Date of publication and mention
of the grant of the patent:
**23.08.2017  Bulletin 2017/34**

(51) Int Cl.:
*H02M 3/158* (2006.01)        *H02M 1/00* (2007.01)
*H02M 1/32* (2007.01)

(21) Application number: **14173842.7**

(22) Date of filing: **25.06.2014**

(54) **Resonant bidirectional DC/DC converter with the same input and output electrical potential**

Resonanter bidirektionaler Gleichstrom-Gleichstromwandler mit demselben Eingangs- und
Ausgangpotenzial

Convertisseur CC/CC résonnant bidirectionnel avec le même potentiel électrique d'entrée et de sortie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.06.2013  KR 20130073903**

(43) Date of publication of application:
**31.12.2014  Bulletin 2015/01**

(73) Proprietor: **Industry Foundation of Chonnam
National University
Gwangju 500-757 (KR)**

(72) Inventors:
• **Park, Sung Jun
500-757 Gwangju (KR)**
• **Park, Seong Mi
670-802 Gyeongsangnam-do (KR)**

(74) Representative: **Stolmár & Partner
Patentanwälte PartG mbB
Blumenstraße 17
80331 München (DE)**

(56) References cited:
**EP-A2- 2 709 257        WO-A1-97/08815
WO-A1-2008/032362    US-A1- 2008 309 301
US-A1- 2011 181 250**

**Description**

BACKGROUND OF THE INVENTION

1. Field of the Invention

The present invention relates generally to a bidirectional direct current DC/DC converter and, more particularly, to a resonant bidirectional DC/DC converter, in which the input and output thereof are grounded in common to the chassis of a vehicle at the same input and output electrical potential and then double boost can be achieved, and in which a resonance destruction phenomenon, attributable to interference between inductor currents during parallel driving for quadruple boost, does not occur and thus an increase in output is facilitated, thereby being applied to a dual power supply system for a vehicle.

2. Description of the Related Art

Recently, as a need for high fuel efficiency has increased because of a concern about global warming, research has been actively conducted into stop-start system technology in which the operation of an engine is stopped during the no-load operation of a vehicle in an automobile system in order to reduce the consumption of energy.
Since the fuel consumed by the no-load operation of a vehicle amounts to about 5-8% of the total fuel consumed, a stop-start system is necessarily applied to hybrid vehicles, and also the application of the system to general internal combustion engine vehicles is extending.
In general, stop-start systems necessarily employ an engine starting motor operating at a high voltage in order to maximize efficiency, and a 48-V voltage system is constructed in order to operate the engine starting motor.
Accordingly, in the case of hybrid vehicles, a dual power supply system has been introduced in which an existing 12 V voltage system is employed for a low-level power demand, such as a demand for lighting, and a 48 V voltage system is constructed for a high-level power demand, such as a demand for a start system, a power steering system, and an air-conditioning and heating system.
The same grounding is essential because a dual voltage system requires that input and output power sources are grounded in common to the chassis of a vehicle due to the characteristics of a vehicle electrical system, and an increase in the efficiency of a DC/DC converter is also essential because high boost, such as quadruple boost, is required.

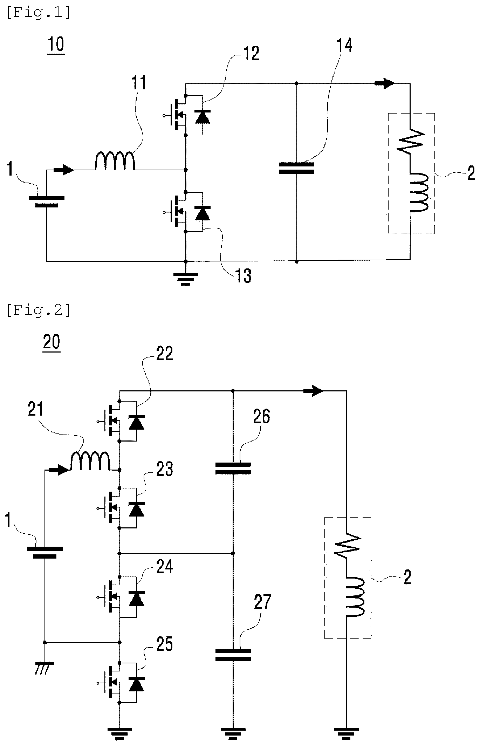

FIG. 1 is a diagram illustrating a conventional bidirectional DC/DC converter 10 having an input and output common ground. Referring to FIG. 1, the conventional bidirectional DC/DC converter 10 having an input and output common ground includes an inductor 11 configured to perform the charging and discharging of power from an input power source 1; a charging switch 13 configured to connect the output terminal of the inductor 11 to a ground, and to allow the inductor 11 to be charged with the power from the input power source 1; a return switch 12 configured to return the power stored in the inductor 11 to an output side; and an output capacitor 14 configured to receive the power from the input power source 1 and the power stored in the inductor 11, and to supply output power to a load 2.
Furthermore, when the charging switch 13 and the return switch 12 are implemented as MOSFET switch elements, they are interlocked with each other and perform ON and OFF operations in order to reduce the saturated voltage of diodes, and act as buck capacitors in a direction from the output capacitor 14 to the input power source 1.
However, the conventional bidirectional DC/DC converter 10 having an input and output common ground is limited in implementation as a high-efficiency power converter because when it operates as a quadruple or higher boost converter, the time it takes to transfer power to an output side is reduced due to the high time ratio of the switch.
FIG. 2 is a diagram illustrating a conventional double boost-enabled soft switching-type bidirectional DC/DC converter 20. Referring to FIG. 2, the conventional double boost-enabled soft switching-type bidirectional DC/DC converter 20 includes an inductor 21 directly connected to an input power source 1, and configured to perform the charging and discharging of input power; a first output capacitor 26 and a second output capacitor 27 connected in series to each other; a first switch 22 and a third switch 24 configured to supply the current of the inductor 21 to the first output capacitor 26 and then charge the first output capacitor 26 through series resonance; and a second switch 23 and a fourth switch 25 configured to operate in the state of being interlocked with the first switch 22 and the third switch 24, and to supply the current of the inductor 21 to the second output capacitor 27 and then charge the second output capacitor 27 through series resonance.
However, the conventional double boost-enabled soft switching-type bidirectional DC/DC converter 20 is problematic in that it cannot be used in cases, such as a vehicle in which all power sources are grounded to a vehicle frame, because the reference electrical potential of the input power source 1 is different from the reference electrical potential of the output capacitors 26 and 27.
Furthermore, the conventional double boost-enabled soft switching-type bidirectional DC/DC converter 20 has a structure incapable of parallel driving for an increase in current capacity because the two output capacitors are connected to an output, and inductor currents interfere with each other upon parallel driving, and thus a phenomenon of resonance destruction occurs.

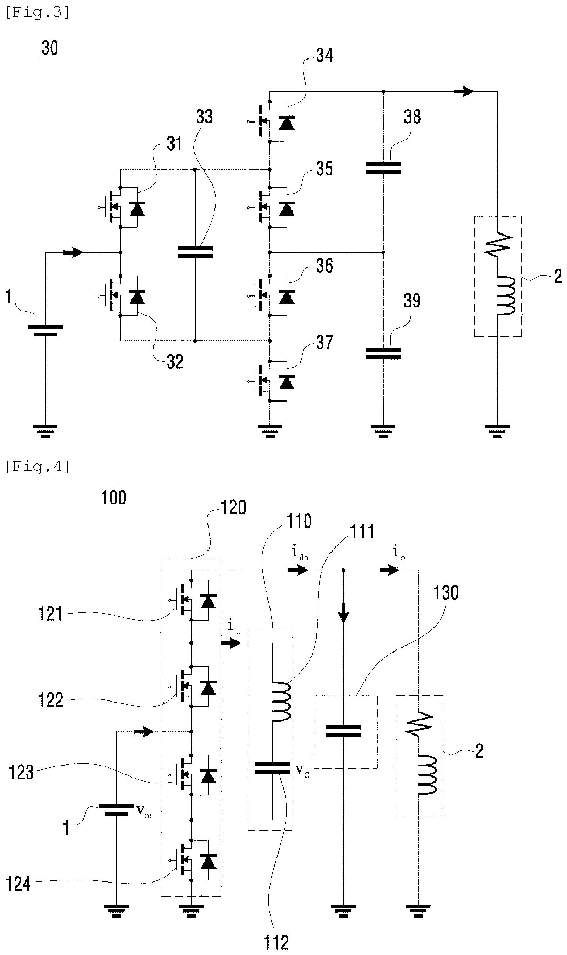

FIG. 3 is a diagram illustrating a conventional double boost-enabled identical electrical potential-type DC/DC converter 30. Referring to FIG. 3, the conventional double boost-enabled identical electrical potential-type DC/DC converter 30 is configured such that in order to form the same reference electrical potential, a 1-1 switch 31, a 1-2 switch 32 and an input formation capacitor 33 are added to the input side of the conventional double boost-enabled soft switching-type bidirectional DC/DC converter 20 illustrated in FIG. 2.

That is, the conventional double boost-enabled identical electrical potential-type DC/DC converter 30 is configured such that the input formation capacitor 33 is charged with the power from the input power source 1 by the 1-1 switch 31 and the 1-2 switch 32 and the output capacitors 38 and 39 are charged with the power stored in the input formation capacitor 33.

WO 2008/032362 discloses a DC/DC converter including a charging and dischargin unit and a switching unit configured as illustrated in Figure 1.

WO 97/08815 discloses using two inductors 26 and 28 (cf. Fig 1) in order to avoid a "shoot-through" current when a direct path is created between power supply and source (cf. page 1, lines 15-20 and page 3, lines 7-9).

SUMMARY OF THE INVENTION

As the result of efforts to research and develop a DC/DC converter suitable for a dual power supply system, the inventors have developed a DC/DC converter according to claim 1.

BRIEF DESCRIPTION OF THE DRAWINGS

The above and other objects, features and advantages of the present invention will be more clearly understood from the following detailed description taken in conjunction with the accompanying drawings, in which:

FIG. 1 is a diagram illustrating a conventional bidirectional DC/DC converter having an input and output common ground;
FIG. 2 is a diagram illustrating a conventional double boost-enabled soft switching-type bidirectional DC/DC converter;
FIG. 3 is a diagram illustrating a conventional double boost-enabled identical electrical potential-type DC/DC converter;
FIG. 4 is a diagram illustrating a DC/DC converter according to a comparative example;
FIG. 5 is a diagram illustrating the boost mode of the DC/DC converter according to the comparative example;
FIG. 6 is a diagram illustrating the buck mode of the DC/DC converter according to the comparative example;
FIGS. 7 to 12 are diagrams illustrating the simulation waveforms of the DC/DC converter according to the comparative example;
FIG. 13 is a diagram illustrating a DC/DC converter according to another comparative example; and
FIG. 14 is a diagram illustrating a DC/DC converter according to an embodiment of the present invention.

DESCRIPTION OF THE PREFERRED EMBODIMENTS

Although general terms widely used currently are selected as the terms used herein as much as possible, the terms selected by the applicant as desired are also used in specific cases. In these cases, the meanings of the terms should be interpreted based on the meanings used and described in the following detailed description, rather than simply based on the names of the terms.

The technical configuration of the present invention will be described in detail with reference to embodiments illustrated in the accompanying diagrams.

However, the present invention is not limited to the described embodiments, and may be implemented in different forms. Throughout the specification, the same reference numerals designate the same or like components.

Referring to FIG. 4, a DC/DC converter 100 according to comparative example useful for understanding the present invention includes a charging and discharging unit 110, a switching unit 120, and an output unit 130.

Furthermore, the DC/DC converter 100 according to this comparative example operates in boost mode in a direction from an input side to an output side, that is, from an input power source 1 to the output unit 130, and operates in buck mode in a direction from the output side to the input side.

Furthermore, the DC/DC converter 100 according to this comparative example enables common grounding because the input power source 1 and the output unit 130 have the same reference electrical potential, and is thus suitable for a dual power supply system for an automobile.

The charging and discharging unit 110 receives power from the input power source 1 and is charged with the power, or discharges charged power to the output unit 130, thereby transferring energy to the output unit 130.

Furthermore, the charging and discharging unit 100 includes a charging inductor 111, and a charging capacitor 112 directly connected to the charging inductor 111 and configured such that voltage is stored by a zero current switching (ZCS) method while the inductor current of the charging inductor 111 is forming series resonance.

The switching unit 120 is disposed between the input power source 1 and the charging and discharging unit 110, and allows the charging and discharging unit 110 to be charged with power from the input power source 1 or return power stored therein to the output unit 130.

Furthermore, the switching unit 120 includes four switching elements. The four switching elements include a first switching element 121 configured such that the first terminal thereof is connected to the first terminal of the output unit 130 and the second terminal thereof is connected to the charging inductor 111; a second switching element 122 configured such that the first terminal thereof is connected to the second terminal of the first switching element 121 and the second terminal thereof is connected to the input power source 1; a third switching element 123 configured such that the first terminal thereof is connected to the second terminal of the second switching element 122 and the second terminal thereof is connected to the charging capacitor 112; and a fourth switching element 124 configured such that the first terminal thereof is connected to the second terminal of the third switching element 123 and the second terminal thereof is connected to a ground.

The output unit 130 receives power stored in the charging and discharging unit 110, and provides output power to a load 2.

Furthermore, the output unit 130 includes a single capacitor configured to store voltage, and is grounded at the same reference electrical potential as the input power source 1.

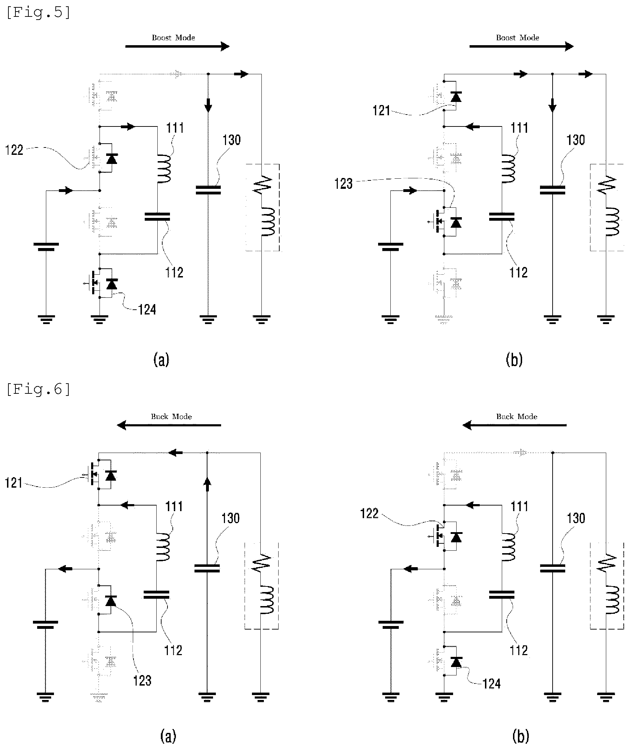

The boost mode of the DC/DC converter 100 according to a comparative example will be described in detail with reference to FIG. 5.

Referring to FIG. 5A, in boost mode, the second switching element 122 and the fourth switching element 124 are turned on; the input power source 1, the second switching element 122, the charging inductor 111, the charging capacitor 112 and the fourth switching element 124 are connected to each other in the form of a closed loop, and the charging capacitor 112 is charged with an inductor current by a ZCS method while the inductor current is forming series resonance with the charging capacitor 112.

Furthermore, while the inductor current is forming series resonance with the charging capacitor 112, the inductor current may be expressed by the following Equation 1 and the capacitor voltage of the charging capacitor 112 may be expressed by the following Equation 2:

$$i_L(t) = \frac{V_{in} - v_c(t_0)}{Z} \sin\left[\omega_r(t - t_0)\right]$$

$$\text{where } Z = \sqrt{\frac{L_1}{C_1}}, \quad \omega_r = \frac{1}{\sqrt{L_1 C_1}} \tag{1}$$

In Equation (1), $i_L$ is the inductor current, $V_{in}$ is input voltage, $v_c$ is the out voltage of the output unit 130, $L_1$ is the capacity of the charging inductor 111, and $C_1$ is the capacity of the charging capacitor 112.

$$v_c(t) = V_{in} - \left[V_{in} - v_c(t_0)\right]\cos\left[\omega_r(t - t_0)\right] \tag{2}$$

Furthermore, the output unit 130 is responsible for the output current output to the load, in which case a variation in output voltage is expressed by the following Equation 3:

$$\Delta V_0 = \int_0^{T/2} \frac{V_0}{R} dt = \frac{V_0}{2RC_0 f_s} \tag{3}$$

where $V_0$ is the voltage of the output unit 130, $R$ is the load, $C_0$ is the capacitance of the output unit 130, and $f_s$ is the series resonance frequency.

Accordingly, when the ripple factor of the output voltage is determined, the capacitance of the output unit 130 corresponding to the ripple factor is determined by the following Equation 4:

$$C_0 = \frac{1}{2R(\Delta V_0 / V_0) f_s} \tag{4}$$

Next, referring to FIG. 5B, the second switching element 122 and the fourth switching element 124 are turned off, and the first switching element 121 and the third switching element 123 are turned on. In this case, the input power source 1, the third switching element 123, the charging capacitor 112, the charging inductor 111, the first switching element 121 and the output unit 130 are connected to each other in the form of a closed loop. The voltages of the input power source 1 and the charging capacitor 112 are added to each other and are then supplied to the output unit 130. The output unit 130 supplies the boosted power to the load 2.

In this case, the inductor current of the charging inductor 111 is expressed by the following Equation 5 and the capacitor voltage of the charging capacitor 112 is expressed by the following Equation 6:

$$i_L = \frac{V_{in} - v_c(t_1)}{Z} \sin[\omega_r(t - t_0 - T_s/2)] \tag{5}$$

where $T_s$ is the switching period.

$$v_c(t) = V_{in} - [V_{in} - v_c(t_1)]\cos[\omega_r(t - t_0 - T_s/2)] \tag{6}$$

Furthermore, the voltage average value of the charging capacitor 112 is the input voltage, and the maximum voltage and the minimum voltage are expressed by the following Equation 7:

$$\begin{aligned} V_{c\_max} &= V_{in} + \Delta V_c / 2 \\ V_{c\_min} &= V_{in} - \Delta V_c / 2 \end{aligned} \tag{7}$$

Accordingly, a variation in the energy of the charging capacitor 112 is expressed by the following Equation 8:

$$\Delta E_c = \frac{1}{2} C V_{in} \Delta V_c \, [joule] \tag{8}$$

Furthermore, the power that the charging capacitor 112 transfers to the output side is expressed by the following Equation 9, and the power that the input power source 1 transfers to the output side is expressed by the following Equation 10:

$$P_c = \frac{1}{2} f_s C V_{in} \Delta V_c \, [W] \tag{9}$$

$$P_e = \frac{1}{4} \frac{V_0^2}{R} \, [W] \tag{10}$$

Accordingly, the total power that is transferred to the output side in boost mode may be defined as the sum of the power transferred by the charging capacitor 112 and the power transferred by the input power source 1, as given by the following Equation 11:

$$P_t = P_c + P_e = \frac{1}{2} f_s C V_{in} \Delta V_c + \frac{1}{4} \frac{V_0^2}{R} \, [W] \tag{11}$$

Furthermore, when power conversion loss is negligible, it can be assumed that the power transferred from the input side to the output side is the same as the power consumption of the output side, and thus the voltage ripple of the charging capacitor 112 can be defined as the following Equation 12:

$$\Delta V_c == 2\frac{V_{in}}{Rf_s C_1} \qquad (12)$$

Furthermore, the condition under which the negative voltage does not occur in the charging capacitor 112 is given by the following Equation 13, and the capacitance that satisfies this condition is given by the following Equation 14:

$$\Delta V_c \le 2V_{in} \qquad (13)$$

$$C_1 \ge \frac{3}{Rf_s} \qquad (14)$$

FIG. 6 illustrates the buck mode of the DC/DC converter 100 according to a comparative example. Referring to FIG. 6A, in buck mode, the first switching element 121 and the third switching element 123 are turned on, the output unit 130, the first switching element 121, the charging inductor 111, the charging capacitor 112 and the third switching element is connected to the input power source 1 in the form of a closed loop, and the inductor current is stored in the charging capacitor 112 by a ZCS method in the form of a voltage while forming series resonance with the charging capacitor 112.

Furthermore, the capacitor voltage of the charging capacitor 112 corresponds to a voltage obtained by subtracting the voltage of the input power source 1 from the voltage of the output unit 130.

Furthermore, Referring to FIG. 6B, the first switching element 121 and the third switching element 123 are turned off, the second switching element 122 and the fourth switching element 124 are turned off, the fourth switching element 124, the charging capacitor 112, the charging inductor 111, the second switching element 122 and the input power source 1 are connected in the form of a closed loop, and the voltage with which the charging capacitor 112 has been charged is supplied to the input power source 1.

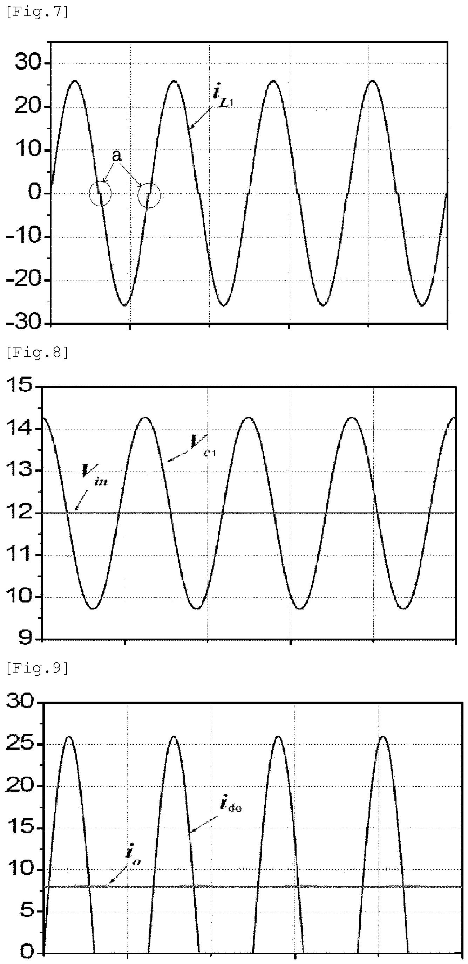

FIGS. 7 to 12 illustrate simulation waveforms. The simulations were conducted under the conditions that the capacity of the charging inductor 111 was set to 0.17 $\mu$H, the capacity of the charging capacitor 112 was set to 22 $\mu$F, the resonance frequency was set to 82.3 kHz, and the switching frequency was set to 80 kHz.

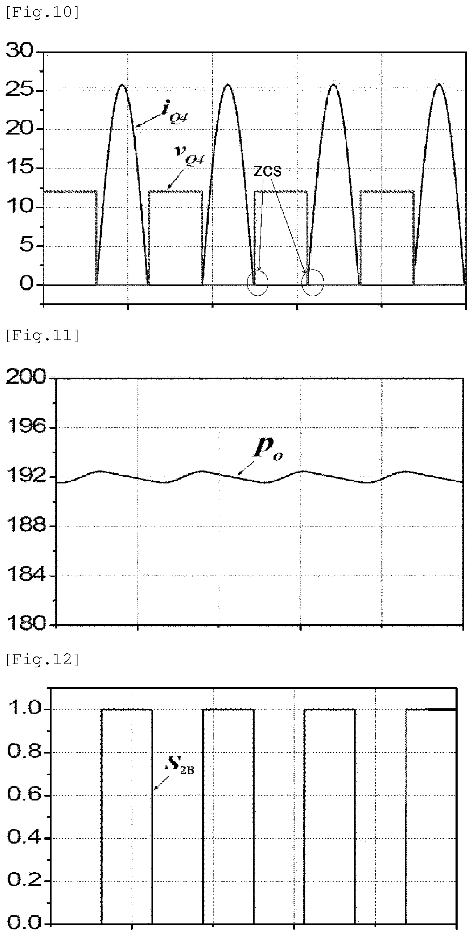

Furthermore, FIG. 7 illustrates the simulation waveform of the inductor current $i_{L1}$ of the charging inductor 111, FIG. 8 illustrates the simulation waveform of the capacitor voltage $V_{C1}$ of the charging capacitor 112 and the simulation waveform of the voltage $V_{in}$ of the input power source 1, FIG. 9 illustrates the simulation waveforms of the output current $I_{do}$ and load current $I_o$ of the DC/DC converter, FIG. 10 illustrates the simulation waveforms of the voltage $V_{Q4}$ and current $I_{Q4}$ of the fourth switching element, FIG. 11 illustrates the simulation waveform of the output power, and FIG. 12 illustrates the simulation waveform of the switching signal of the fourth switching element.

Referring to FIGS. 7 and 12, since the resonance circuit having a resonance frequency of 82.3 kHz applied a switching signal of 80.0 kHz, regions 'a' in which the resonance current was discontinuous were present. Referring to FIGS. 7 and 8, the difference in phase between the charging voltage $V_{C1}$ and the inductor current $i_{L1}$ of the capacitor 112 was 90 degrees, and the voltage ripple was 0.1 V.

Furthermore, referring to FIG. 9, the output current $I_{do}$ appeared in the form of an approximate sine wave half-wave rectified waveform, and the peak value thereof is given as the following Equation 15:

$$I_{do\_PEAK} = 2\sqrt{2}I_0 = 2\sqrt{2}\frac{V_0}{R} \qquad (15)$$

Furthermore, from FIGS. 10 and 12, it can be seen that zero current switching (ZCS) was performed when the switching element was turned on and off.

Furthermore, from FIG. 11, it can be seen that a ripple of 0.1 occurred with respect to an average output of about 192 W and thus extremely desired output was achieved.

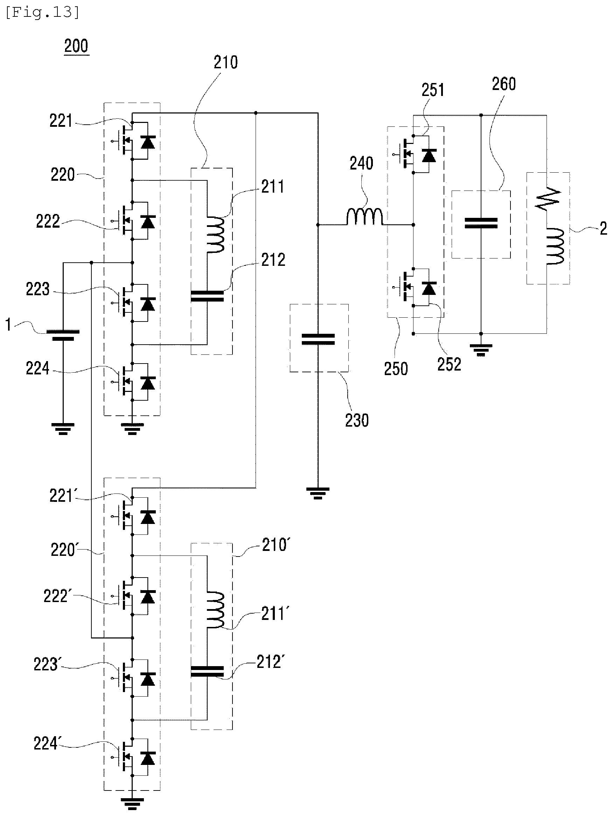

FIG. 13 is a diagram of a DC/DC converter according to another comparative example, and illustrates a topology for the parallel driving of a DC/DC converter 100 according to the former embodiment of the present invention.

Referring to FIG. 13, the DC/DC converter 200 according to another comparative example includes a first charging and discharging unit 210 configured to include a first charging capacitor 212 directly connected to a first charging inductor 211 on the input side thereof; a first switching unit 220 configured to include four switching elements 221, 222, 223 and 224, and to charge the first charging and discharging unit 210 with power from the input power source 1 or return the power to a first output unit 230; a second charging and discharging unit 210' connected in parallel to the first charging and discharging unit 210 and configured to include a second charging inductor 211' and a second charging capacitor 212' directly connected to each other; a second switching unit 220' configured to include four switching elements 221', 222', 223' and 224', and to charge the second charging and discharging unit 210' with power from the input power source 1 or return the power to the first output unit 230; and a first output unit 230 configured to store the voltages of the first charging and discharging unit 210 and the second charging and discharging unit 210'.

Furthermore, the first charging and discharging unit 210 and the second charging and discharging unit 210' perform substantially the same function as the charging and discharging unit 110 of the DC/DC converter 100 according to the former comparative example, and the first switching unit 220 and the second switching unit 220' perform substantially the same function as the switching unit 120 of the DC/DC converter 100 according to the former comparative example.

That is, the DC/DC converter 200 according to the other comparative example is configured such that two DC/DC converters 100 according to the former comparative example are connected and form two stages, and performs an interleave operation.

The DC/DC converter 200 according to the other comparative example includes an output inductor 240 to charge the output side with power from the first output unit 230 or discharge charged power; a third switching unit 250 configured to charge the output inductor 240 with power from the first output unit 230 or discharge charged power to a second output unit 260, and to include two switching elements 251 and 252; and the second output unit 260 configured to provide the power of the output inductor 240 and the power of the first output unit 230 to a load 2.

That is, the output side configuration of the DC/DC converter 200 according to the other comparative example is substantially the same as that of the conventional bidirectional DC/DC converter 10 having an input/output common ground illustrated in FIG. 1, and their operations are substantially the same.

Furthermore, the DC/DC converter 200 according to the other comparative example has the advantage of enabling parallel driving with high power conversion efficiency because the first and second charging inductors 211 and 211' are connected in series to the input power source 1 when power is transferred to the output side and thus there is no interference of the inductor current upon parallel driving.

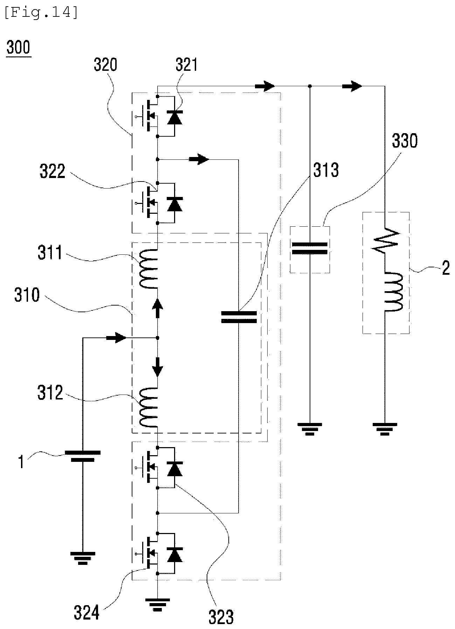

Furthermore, FIG. 14 illustrates a DC/DC converter 300 according to an embodiment of the present invention. Referring to FIG. 14, in the DC/DC converter 300 according to this embodiment of the present invention, a charging and discharging unit 310 includes a charging inductor 311, an arm short protection inductor 312 and a charging capacitor 313, and a switching unit 320 includes a first switching element 321, a second switching element 322, a third switching element 323 and a fourth switching element 324.

That is, the arm short protection inductor 312 is added compared to the DC/DC converter 100 according to the first comparative example.

Furthermore, the first terminal of the charging inductor 311 is connected to the input power source 1, the first terminal of the arm short protection inductor 312 is connected to the first terminal of the charging inductor 311, and the first terminal of the charging capacitor 313 is connected to the second terminal of the charging inductor 311 and the second terminal of the charging inductor 311 is connected to the second terminal of the arm short protection inductor 312.

Furthermore, the first terminal of the first switching element 321 is connected to the first terminal of the output unit; the second switching element 322 connects the second terminal of the charging inductor 311 to the first terminal of the charging capacitor 313, the first terminal of the second switching element 322 is connected to the second terminal of the first switching element 321 and the first terminal of the charging capacitor 313, and the second terminal of the second switching element 322 is connected to the second terminal of the charging inductor 311; the first terminal of the third switching element 323 is connected to the second terminal of the arm short protection inductor 312, and the second terminal of the third switching element 323 is connected to the second terminal of the charging capacitor 313; and the first terminal of the fourth switching element 324 is connected to the second terminal of the third switching element 323 and the second terminal of the charging capacitor 313, and the second terminal of the fourth switching element 324 is grounded.

That is, the switching unit 320 of the DC/DC converter 300 according to this embodiment of the present invention is configured such that the second switching element 322 is not connected between the input power source 1 and the charging inductor 311 but is connected between the charging inductor 311 and the charging capacitor 313, compared to the switching unit 120 of the DC/DC converter 100 according to the comparative example.

Furthermore, in boost mode, when the second switching element 322 and the fourth switching element 323 are turned on, the input power source 1 is directly connected to the charging inductor 311, the second switching element 322, the charging capacitor 313 and the fourth switching element 324 and forms series resonance, and the charging capacitor 313 is charged with the inductor current. When the first switching element 321 and the third switching element 323 are turned on, the power of the input power source 1 and the charging capacitor 313 is returned and transferred to the output side.

Meanwhile, when the first switching element 321 and the third switching element 323 are interlocked with the second switching element 322 and the fourth switching element 323, the second switching element 322 and the fourth switching element 323, and the first switching element 321 or the third switching element 323 are simultaneously turned on, and thus an arm short phenomenon in which a plus terminal and a minus terminal are directly connected may occur. Since this arm short phenomenon may cause the damage of an element attributable to a peak current, the DC/DC converter 100 according to the comparative example should be provided with a specific dead time when the switching element is interlocked, and the dead time acts as a factor that deteriorates power conversion efficiency when the switching frequency increases.

In contrast, the DC/DC converter 100 according to this embodiment of the present invention has the advantages of reducing the risk of the damage of the element and preventing the occurrence of the peak current of the switching element because the arm short protection inductor 312 can buffer the flow of current even when the second switching element 322 and the fourth switching element 323, and the first switching element 321 or the third switching element 323 are simultaneously turned on, and can thus prevent an arm short, thereby eliminating the need for a dead time.

Although the preferred embodiments of the present invention have been disclosed for illustrative purposes, those skilled in the art will appreciate that various modifications, additions and substitutions are possible, without departing from the scope of the invention as disclosed in the accompanying claims.

**Claims**

1.   A direct current DC/DC converter, comprising:

a charging and discharging unit (310) configured to perform charging and discharging of input power (1);
a switching unit (320) provided between an input power source (1) and the charging and discharging unit (310), and configured to charge the charging and discharging unit with the input power or return power stored in the charging and discharging unit to an output side; and
an output unit (330) connected to the charging and discharging unit (310) through the switching unit (320), and configured to receive the input power and the power stored in the charging and discharging unit (310) and provide output power;
wherein the output unit (330) and the input power (1) are grounded in common at an identical electrical potential

wherein:

the charging and discharging unit (310) comprises:

a charging inductor (311) configured such that a first terminal thereof is connected to the input power source,
an arm short protection inductor (312) configured such that a first terminal thereof is connected to a first terminal of the charging inductor, and configured to prevent arm short of the switching unit, and
a charging capacitor (313);

the switching unit (320) comprises:

a first switching element (321) configured such that a first terminal thereof is connected to a first terminal of the output unit,
a second switching element (322) configured to connect a second terminal of the charging inductor (311) to a first terminal of the charging capacitor, and configured such that a first terminal of the second switching element is directly connected to a second terminal of the first switching element and a first terminal of the charging capacitor and a second terminal of the second switching element is connected to a second terminal of the charging inductor,
a third switching element (323) such that a first terminal thereof is connected to a second terminal of the arm short protection inductor and a second terminal thereof is directly connected to a second terminal of the charging capacitor, and
a fourth switching element (324) configured such that a first terminal thereof is directly connected to a second terminal of the third switching element and a second terminal of the charging capacitor and a second terminal thereof is grounded; and the direct-current DC/DC converter is arranged such that the first switching element and the third switching element are interlocked with the second switching element and the fourth switching element and are selectively turned on and off.

**EP 2 819 290 B1**

**Patentansprüche**

1. Gleichstrom-DC/DC-Wandler, umfassend:

eine Lade- und Entladeeinheit (310), die derart eingerichtet ist, dass sie das Laden und Entladen der Eingangsleistung (1) durchführt;
eine Schalteinheit (320), die zwischen einer Eingangsleistungsquelle (1) und der Lade- und Entladeeinheit (310) angeordnet ist, die derart eingerichtet ist, die Lade- und Entladeeinheit mit der in der Lade- und Entladeeinheit gespeicherten Eingangsleistung oder Rücklaufleistung an der Ausgangsseite auf eine Ladung zu laden; und
eine Ausgabeeinheit (330), die über die Schalteinheit (320) mit der Lade- und Entladeeinheit (310) verbunden ist und derart eingerichtet ist, dass sie die Eingangsleistung und die in der Ladeund Entladeeinheit (310) gespeicherte Leistung empfängt und eine Ausgangsleistung bereitstellt;
wobei die Ausgabeeinheit (330) und die Eingangsleistung (1) gemeinsam mit einem identischen elektrischen Potential geerdet sind

wobei:

die Lade- und Entladeeinheit (310) aufweist:

eine Ladungsspule (311), die derart eingerichtet ist, dass ein erster Anschluss davon mit der Eingangsleistungsquelle verbunden ist,
eine Kurzschlussinduktionsspule (312), die derart eingerichtet ist, dass ein erster Anschluss derselben mit einem ersten Anschluss der Ladungsspule verbunden ist und derart eingerichtet ist, dass sie einen Kurzschluss der Schalteinheit verhindert
einen Ladekondensator (313), der derart eingerichtet ist, dass ein erster Anschluss davon mit einem zweiten Anschluss der Ladungsspule (311) verbunden ist und ein zweiter Anschluss davon mit einem zweiten Anschluss der Kurzschlussinduktionsspule (312) verbunden ist;

die Schalteinheit (320) aufweist:

ein erstes Schaltelement (321), das derart eingerichtet ist, dass ein erster Anschluss mit einem ersten Anschluss der Ausgabeeinheit verbunden ist,
ein zweites Schaltelement (322), das derart eingerichtet ist, dass es einen zweiten Anschluss der Ladungsspule (311) mit einem ersten Anschluss des Ladekondensators verbindet und derart eingerichtet ist, dass ein erster Anschluss des zweiten Schaltelements mit einem zweiten Anschluss des ersten Schaltelements verbunden ist und ein erster Anschluss des Ladekondensators und ein zweiter Anschluss des zweiten Schaltelements mit einem zweiten Anschluss des Ladungsinduktors verbunden ist,
ein drittes Schaltelement (323), so dass ein erster Anschluss mit einem zweiten Anschluss der Arm-Kurzschlussspule verbunden ist und dessen zweiter Anschluss mit einem zweiten Anschluss des Ladekondensators verbunden ist, und
ein viertes Schaltelement (324), das derart eingerichtet ist, dass ein erster Anschluss davon mit einem zweiten Anschluss des dritten Schaltelements und einem zweiten Anschluss des Ladekondensators verbunden ist und ein zweiter Anschluss davon geerdet ist; und
das erste Schaltelement und das dritte Schaltelement mit dem zweiten Schaltelement und dem vierten Schaltelement verriegelt und selektiv ein- und ausgeschaltet werden.

**Revendications**

1. Un convertisseur DC / DC à courant continu, comprenant:

une unité de charge et de décharge (310) configurée pour effectuer la charge et la décharge d'une puissance d'entrée (1);
une unité de commutation (320) prévue entre une source de puissance d'entrée (1) et l'unité de charge et de décharge (310), et configurée pour charger l'unité de charge et de décharge avec la puissance d'entrée ou rendre la puissance stockée dans l'unité de charge et de décharge à une sortie; et
une unité de sortie (330) connectée à l'unité de charge et de décharge (310) par moyen de l'unité de commutation (320), and configurée pour recevoir la puissance d'entrée et la puissance stockée dans l'unité de charge et de décharge (310) et fournir de la puissance de sortie;
dans lequel l'unité de sortie (330) et la puissance d'entrée (1) sont mises à la masse en commun à un potentiel électrique identique

dans lequel:

l'unité de charge et de décharge (310) comprend:

une inductance de charge (311) configurée de telle manière qu'un premier terminal de celle-ci est connecté à la source de puissance d'entrée,
une inductance de protection de court-circuit (312) configurée de telle manière que un premier terminal de celle-ci est connecté à un premier terminal de l'inductance de charge, et configurée pour prévenir un court-circuit de l'unité de commutation, et
un condensateur de charge (313);

l'unité de commutation (320) comprend:

un premier élément de commutation (321) configuré de telle manière qu'un premier terminal de celui-ci est connecté à un premier terminal de l'unité de sortie,
un second élément de commutation (322) configuré pour connecter un second terminal de l'inductance de charge (311) à un premier terminal du condensateur de charge, and configuré de telle manière que un premier terminal du second élément de commutation est directement connecté au second terminal du premier élément de commutation et un premier terminal du condensateur de charge et un second terminal du second élément de commutation est connecté à un second terminal de l'inductance de charge,
un troisième élément de commutation (323) de telle manière que un premier terminal de celui-ci est connecté à un second terminal de l'inductance de protection de court-circuit et un second terminal de celui-ci est directement connecté à un second terminal du condensateur de charge, et
un quatrième élément de commutation (324) configuré de telle manière que un premier terminal de celui-ci est directement connecté à un second terminal du troisième élément de commutation et un second terminal du condensateur de charge et un second terminal de celui-ci est mis à la masse; et
le convertisseur DC / DC à courant continu est disposé de telle manière que le premier élément de commutation et le troisième élément de commutation sont interverrouillés avec le second élément de commutation et le quatrième élément de commutation et sont activés et désactivés sélectivement.

[Fig.1]

[Fig.2]

[Fig.3]

_30_

[Fig.4]

_100_

[Fig.5]

Boost Mode →

122 —

111

130

112

124

(a)

Boost Mode →

121 —

123 —

111

130

112

(b)

[Fig.6]

← Buck Mode

121 —

111

130

112

123

(a)

← Buck Mode

122 —

111

130

112

124

(b)

[Fig.7]

[Fig.8]

[Fig.9]

[Fig.10]

[Fig.11]

[Fig.12]

[Fig.13]

[Fig.14]

<u>300</u>

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008032362 A

- WO 9708815 A